# EUROPEAN PATENT APPLICATION

(11) **EP 4 564 220 A1**
(43) Date of publication of application: **04.06.2025**
(21) Application number: 23213356.1
(22) Date of filing: 30.11.2023
(51) Int. Cl.: G06F 40/232

(54) **METHOD AND SYSTEM FOR MANAGING DOMAIN SPECIFIC USER INTERACTIONS**

(71) Applicant: Siemens Aktiengesellschaft, 80333 München (DE)
(72) Inventor: PV, Hemanth, 676319 Parappanangadi, Kerala (IN); SAHU, Sukalyan, 560100 Bangalore, Karnataka (IN)
(74) Representative: Horn Kleimann Waitzhofer Schmid-Dreyer Patent- und Rechtsanwälte PartG mbB

(57) **Abstract**

A system (200) and a method for managing domain specific user interactions. The method (100) includes receiving at least one user input using an application program interface (API) (222) and determining a text version of the at least one user input. The method also includes analysing the text version of the user input by a corrector unit (220) based on a communication with a domain specific database (218A) of a plurality of domain specific databases (218A-N), where each of the domain specific database (218A-N) comprises knowledge graphs associated with at least one of a product and a domain of the product. Further, the method includes determining a domain specific correction for the text version of the user input based on a correlation between the at least one user input and at least one knowledge graph; and displaying the text version of the user input with the domain specific correction.

## Description

The present disclosure relates generally to user interaction associated with a product, and more specifically to a method and a system for managing domain specific user interactions.

Generally, product-based organizations may include multiple products spanning across multiple domains. The multiple products may include but not limited to health care-based software or hardware solutions, software or hardware solutions installed in electrical substations, etc. An on-field customer who uses te products of the organization may have feature requests, feature improvements, support issues which needs to be communicated to the organization. These communications generally happens through written email mechanism or through direct interactions between the users and a representative of the organization. However, the said means of communications are not efficient in real-time and there may be miscommunication caused due to incorrect or generic statement from the user. Also, the user may not be aware of all the details associated with the product that they want to communicate about with the organization which may lead to a large number of mails to be exchanged or the user not being able to get the right support within a shot span of time. This may lead to a reduction in customer satisfaction and hostility eventually.

Conventionally, the above-mentioned problem is addressed by highly skilled product Owners or business analysts with advanced domain knowledge from the organizations meet the customers and receive the feedback in-person. Also, email or text-based interaction is also used. Some organizations provide live support over call to receive the user feedback. In all the above scenarios, the research and development (R&D) team who will eventually address the user feedback is not able to get specific details from the customer which may be required to address the user feedback.

Therefore, there is a need to create a smart environment for seamless interaction between the customers and the R&D team. The environment should be capable of interpreting the customer 's statements or terms in context of the domain they work. However, the creation of such smart environment which is capable of con-textualizing the statements or terms to a working domain has the following challenges:
1. There is no readily available Domain Specific Language (DSL) interpreter specific to any domain which can help correcting the customer's statements as per the product and domain in which the customer works.
2. No automatic process to extract the information from the humongous product or technical or domain related documents and make the infromation available during the interaction between the customer and the organization in real time.
3. Reading and understanding the technical or domain plant documents require expert level skills which may be sometime rare.

This is not desirable, as due to all the above-mentioned reasons the customers remain out of the R&D cycle and impacts the response that the organization provides to the customer.

In light of the above, there remains a need for an improved method for managing domain specific user interactions by the organizations with the R&D team in loop, so that the customer support is efficient leading to high customer satisfaction.

The present disclosure seeks to overcome the above-mentioned challenges by using a corrector unit which is integrated with multiple domain specific databases. Each of the multiple domain specific databases have knowledge graphs including keywords associated with a corresponding domain and products. Every time a customer (also referred to as user) provides a voice input, the voice input is corrected and interpreted by the corrector unit based on the multiple domain specific databases. As a result, domain specific input is provided to the R&D team, so that the R&D team addresses the user feedback. Therefore, the revised approach enhances the efficiency of not only domain specific user interaction/feedback but also optimizing the response to the user feedback by the organizations' s R&D teams. Therefore, the goal of the technology described herein is to formulate user inputs that have a high probability of interpreting the user's requested task accurately while issuing the fewest number of response queries to the user before determining the intended task.

The object of the present disclosure is achieved by a computer-implemented method for managing domain specific user interactions by a system. The proposed solution includes receiving a voice input from a user using an application program interface (API) and determining a text version of it. Then the text version is analysed by a corrector unit which is integrated to a domain specific database. This domain specific database comprises knowledge graphs associated with a product and a domain of the product. Using this, the proposed solution determines a domain specific correction for the text version of the user input by also taking into consideration a user context, user persona, etc. For example, if a user provides a voice feedback saying, "temperature is uncontrollable in surrounding" then the proposed solution analyses that the user is referring to building context and not "temperature" in medical context and displays the text version of the user input with the domain specific correction as "temperature is uncontrollable in surrounding of the building".

In one or more embodiments, the knowledge graphs are a domain based logical network, and each node in the at knowledge graphs represents a domain specific keyword and the domain specific keyword is connected to domain actions and specific details associated with the product.

In one or more embodiments, determining the domain specific correction for the text version of the user input based on the correlation between the at least one user input and at least one knowledge graph includes comparing the text version of the user input and the plurality of nodes in the knowledge graphs and determining by the corrector unit (220) the correlation between the at least one user input and the at least one knowledge graph based on the comparison. Further, the method includes determining the domain specific correction for the text version of the user input based on the correlation between the at least one user input and at least one knowledge graph.

In one or more embodiments, displaying the text version of the user input with the domain specific correction includes performing auto-correction to the text version of the user input based on the determined domain specific correction and displaying auto-corrected text version of the user input.

In one or more embodiments, generation of the domain specific database includes identifying a plurality of content associated with at least one of a product and a domain of the product, across a distributed system and extracting meta-data associated with the plurality of content by parsing the plurality of content. The method also includes obtaining the meta-data related to at least one of the product and the domain of the product based on a filtering of the meta-data associated with the plurality of content and generating the domain specific database comprising the meta-data related to at least one of the product and the domain of the product.

In one or more embodiments, the method further includes generating the knowledge graphs associated with at least one of the product and the domain of the product based on the meta-data in the domain specific database.

In one or more embodiments, the corrector unit is connected to the API on one side and to the domain specific database on another side.

In one or more embodiments, the correlation between the at least one user input and the at least one knowledge graph is determined by corrector unit by taking into consideration the at least one product, the domain of the product, a user context and user personas.

In one or more embodiments, the method further includes sending the text version of the user input with the domain specific correction to a support unit for responding to the at least one user input.

In one or more embodiments, the text version of the user input with the domain specific correction invokes a digital assistant of the support unit.

The object of the present disclosure is also achieved by a system for managing domain specific user interactions. The system includes an interface configured to receive at least one user input using an application program interface (API); a processor and a memory coupled to the processor. The memory comprises instructions which, when executed by the processor, configures the processor to determine a text version of the at least one user input and analyse the text version of the user input by a corrector unit (220) based on a communication with a domain specific database (218A) of a plurality of domain specific databases (218A-N), where each of the domain specific database (218A-N) comprises knowledge graphs associated with at least one of a product and a domain of the product;. Further, the processor is configured to determine a domain specific correction for the text version of the user input based on a correlation between the at least one user input and at least one knowledge graph; and display the text version of the user input with the domain specific correction.

In embodiments, the system is configured and/or implemented to carry out the aforementioned method.

The object of the present disclosure is further achieved by a computer program code which, when executed by a processor, cause the processor to carry out steps of the aforementioned method.

The object of the present disclosure is further achieved by a computer program product comprising computer program code which, when executed by a processor, cause the processor to carry out steps of the aforementioned method.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
FIG 1 is a flowchart representation of a computer-implemented method for managing domain specific user interactions by a system, in accordance with one or more embodiments of the present disclosure;
FIG 2A is a block diagram representation of a system for managing the domain specific user interactions, in accordance with one or more embodiments of the present disclosure;
FIG 2B is a block diagram representation of an interaction management controller, in accordance with one or more embodiments of the present disclosure;
FIG 3 is an exemplary depiction of a customer interaction leading to domain corrected text, in accordance with one or more embodiments of the present disclosure;
FIG 4 is an exemplary depiction of the domain corrected text generation by the corrector unit and multiple domain specific databases, in accordance with one or more embodiments of the present disclosure;
FIG 5 is an exemplary depiction of a domain specific database integrated with product specific data, in accordance with one or more embodiments of the present disclosure;
FIG 6 is an exemplary depiction of a method of extracting meta-data associated with a plurality of content, in accordance with one or more embodiments of the present disclosure;
FIG 7 is a flowchart representation of a method of creation of the domain specific database integrated with corrector unit, in accordance with one or more embodiments of the present disclosure;
FIG 8 is an exemplary depiction of the domain specific database and corresponding knowledge graph, in accordance with one or more embodiments of the present disclosure;
FIG 9 is an exemplary depiction of a solution with the corrector unit integrated with the knowledge graphs and domain specific database, in accordance with one or more embodiments of the present disclosure; and
FIG 10 is an exemplary depiction of the method for managing the domain specific user interactions by the system, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for managing domain specific user interactions are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

Conventional methods and systems for addressing the user request or the user input are not very efficient. They rely on the user input which may not clearly indicate the domain or the product to which the user input is related. As a result, the response to the user input may not be available especially when the response needs to be received on urgent basis. This may impact the customer relationship of the organization.

Unlike to the conventional methods and systems, the proposed method includes an integrated cognitive API which ensures an efficient way of interaction with the user/customer. Also, the automatic generation of domain specific databases from humongous product and domain related documents provides an efficiency solution. The proposed solution enables real-time feedback system from the customer. The immediate advantage of such a solution when integrated with the products and services of the organization is to help users to communicate with the organization thereby bringing the customer seamlessly and accurately in closed loop in the R&D ecosystem.

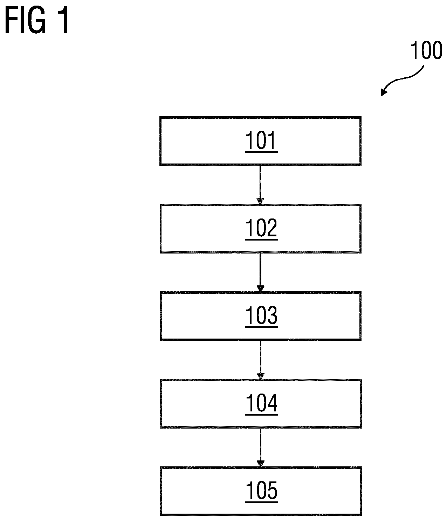

Referring now to FIG 1, illustrated is a flowchart of a method (as represented by reference numeral 100) for managing domain specific user interactions by a system, in accordance with an embodiment of the present disclosure. As used herein, user interactions are between a user of a product and a representative of an organization that sold the product. The user interactions can be for example but not limited to associated with a feature upgrade, feature requests, feature improvements, support issues, etc. Here, managing the domain specific user interactions - refers to on-filed users communicating with the organization from whom they have availed a product or service, for support related to the same. It can be for example a user requesting for configuration related help.

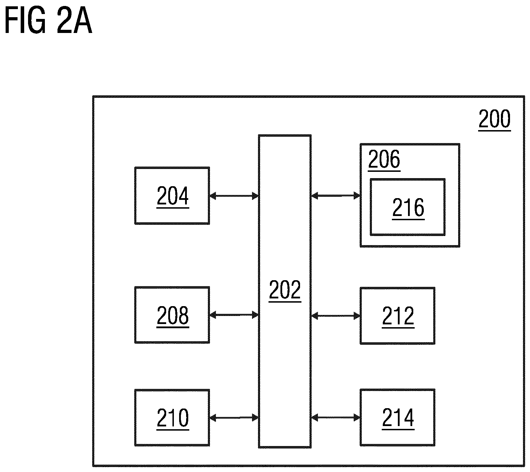

Referring to FIG 2A, illustrated is a block diagram of a system 200 for managing domain specific user interactions, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages. By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the test suite management system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the test suite management system 200. Optionally, the processor includes, but is not limited to, a microprocessor, a microcontroller, a complex instruction set computing (CISC) microprocessor, a reduced instruction set (RISC) microprocessor, an exceptionally long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the test suite management system 200 to communicate with other systems for receiving and transmitting information. The communication interface 208 may include a medium (e.g., a communication channel) through which the test suite management system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling. The database 210 may be same as the domain specific database (218A). However, the database 210 stores the user input and the corresponding text version of the user input with the domain specific correction which may be used for further learning by the corrector unit 220.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be a display. It is to be understood that, when reference is made in the present disclosure to the term "display" this refers generically either to a display screen on its own or to the screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for managing the testcases in the testsuite. In particular, the memory 206 includes an interactions management unit 216 to perform steps for managing the domain specific user interactions. Also, in the system 200, the memory 206 may be configured to store the data associated with or generated by the execution of the inventive steps.

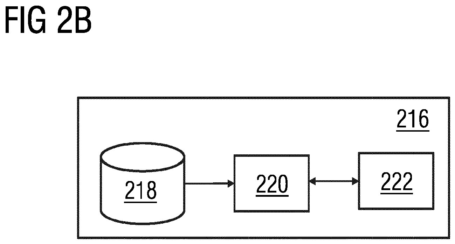

Referring to FIGS 1 and 2A in combination, the various steps of the method 100 as described hereinafter may be executed in the system 200, or specifically in the processor 204 of the system 200, for - managing the domain specific user interactions. For purposes of the present disclosure, the managing the domain specific user interactions present method 100 is embodied as a correction algorithm for correcting the domain specific user interactions. It may be appreciated that although the method 100 is illustrated and described as a sequence of steps, it may be contemplated that various embodiments of the method 100 may be performed in any order or a combination and need not include all of the illustrated steps. FIG 2B is a block diagram representation of an interaction management controller 216 which includes three major components of the proposed solution which are an application program interface (API) 222, a corrector unit 220 and a domain specific database 218A, the functions of which are explained in further steps with respect to the invention.

In embodiments of the present disclosure, at step 101, the method 100 includes receiving a user input using an application program interface (API) 222. The API 222 is connected to the corrector unit 220. The API 222 is the point of reception of the user input. The user input may be in generic terms and may not be provided in completely domain specific terminology. As a result, the user inputs may not be interpreted correctly by the R&D team or support team, which hampers the response to the user input. Here, the user input may be provided in the form of for example but not limited to voice inputs, gestures, etc.

In embodiments of the present disclosure, at step 102, the method 100 includes determining a text version of the user input. The user input is converted using existing methods to the text version. This is done so that the user input can be processed further, and keywords extracted from the user input.

In embodiments of the present disclosure, at step 103, the method 100 includes analysing the text version of the user input by a corrector unit (220) based on a communication with a domain specific database (218A) of a plurality of domain specific databases (218A-N). Here, each of the domain specific database 218A-N includes knowledge graphs associated with a product and a domain of the product. Here, the corrector unit 220 is connected to the API 222 on one side and to the domain specific database 218A on another side. The domain specific database 218A generation includes identifying content associated with a product and a domain of the product from multiple documents which may be spread across a distributed system. For example, individual text segments, e.g., sentences, phrases, words, etc., of the document can be tagged with classes of a model such as an ontology. Phrases matching criteria such as described herein, can be associated with classes of the ontology. Examples of such phrases can include technical phrases, e.g., domain-specific phrases, product names, or component names. Once the content is identified, the meta-data associated with the content is extracted by parsing the content and filter the meta-data. Further, obtain the meta-data related to the product and the domain of the product based on filtering and generate the domain specific database 218A which includes the meta-data related to the product and the domain of the product. Here, the meta-data related to the product can be for example but not limited to usage of the product, specific features of the product, details of the multiple parameters associated with the product, etc. The meta-data related to the domain of the product can be for example but not limited to multiple parameters associated with the domain of the product, etc.

For example, consider the product is an electro-cardiogram (ECG) machine and then the meta-data associated with the ECG machine can be diagnostic statement, ECG parameters including ventricular rate, PR interval, QRS duration, QT/QTc, and P-R-T axes, ECG values, ECG waveforms, demographic, diagnosis, medication, laboratory, etc. The domain of the ECG machine is cardiology and hence the meta-data related to the domain includes cardiovascular-related iniquities and disparities, terminology associated with the cardiology.

Further, once the domain specific database 218A is generated, the domain specific database 218A is used for generating the knowledge graphs associated with the product and the domain of the product. The knowledge graphs are a domain based logical network, and each node in the knowledge graphs represents a domain specific keyword and the domain specific keyword is connected to domain actions and specific details associated with the product. The knowledge graph may include more subject matter entities that can be practically asked about in a question to the user. Thus, the proposed solution includes generating the knowledge graphs for each of the product and the domain associated with the product. As a result, the terminologies associated with the product and the domain of the product are ensured to be captured in a logical manner in the knowledge graphs. For example, by mapping user input to ontologies or keywords, the user input can be grouped according to various classes of words or phrases. This can increase consistency of words across various contexts. For example, a customer term for a problem with a software element can be mapped to a class that represents a technical term used by an administrator of the software element.

In embodiments of the present disclosure, at step 104, the method 100 includes determining the domain specific correction for the text version of the user input based on the correlation between the at least one user input and at least one knowledge graph. The correlation between the one user input and the knowledge graph is determined by the corrector unit 220 by taking into consideration the product, the domain of the product, a user context and user personas. For example, consider that the user input includes a term "Temperature." The term could be used in Building Automation context which can be wrongly interpreted in medical domain if the context is not clear. Similarly, when the system 200 identifies the user persona as a medical device owner then the product usage and the terms associated will be interpreted correctly. Therefore, the proposed solution does not rely on the terms in the user input and logically determines the correlation between the term and the knowledge graph that needs to be used for the interpretation and correction of the user input.

In embodiments of the present disclosure, at step 105, the method 100 includes displaying the text version of the user input with the domain specific correction. Based on the correlation between the term from the user input and the knowledge graphs the system 200 corrects the user input. In order to determine the domain specific correction of the user input, the system 200 performs an auto-correction to the text version of the user input based on the determined domain specific correction. For example, if the user input mentions "drastic variation in temperature from thermostat" then the system 200 would have interpreted the statement as been associated with the Building Automation or with health domain. With the proposed solution, the system 200 interprets the term temperature as associated with the Building Automation due to the use of the term "thermostat" and also based on user context and user persona, and correctly interprets the user input as being associated with the Building Automation. As a result, the proposed solution ensures that the user input is rightly diverted to the Building Automation support team for being addressed rather than having a confusion between the Building Automation team and the health device team.

The method 100 further includes sending the corrected user input to a support unit for responding to the user input. The corrected version of the user input invokes a digital assistant of the support unit. In an example, on obtaining the domain specific correction of the user input the digital assistant of the support unit of the specific domain may be activated to provide auto-generated response to the user input. In another example, the domain specific correction of the user input may be sent to the support unit to respond to the user input by personnel from the support unit and further interaction with the user may be made depending on the requirements.

Therefore, the proposed solution provides improved mechanism of managing the domain specific user interactions. This is because of the corrector unit 220 integrated with the domain specific database 218 which is able to accurately interpret the user input corresponding to the product and the domain of the product. As a result, the proposed solution ensures that the response to the user feedback or the user input from the right support team is accurately provided. Here, the possibility of the user input being diverted to a wrong support team is eliminated as the user input is rightly interpreted based on the knowledge graphs which have multiple nodes of the keywords related to the domain or the product of user's interest.

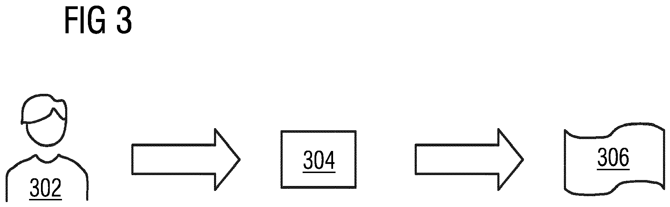

FIG 3 is an exemplary depiction of a customer interaction leading to domain corrected text, in accordance with one or more embodiments of the present disclosure. Referring to the FIG. 3, at step 302, the user input including specific terms is received by the API 222 from an on-field customer. At step 304, the cognitive API 222 integrated DSL dictionary/ domain specific database 218 is used by the corrector unit 220 to determine the domain corrected text (as provided in step 306). The proposed solution provides a cognitive API based solution with integrated DSL (Domain Specific Language) dictionaries which can capture the user request with clarity, with context and with less noise. As a result, the proposed solution provides domain corrected text with high accuracy enabling the right support or the R&D team to cater to the needs of the user request.

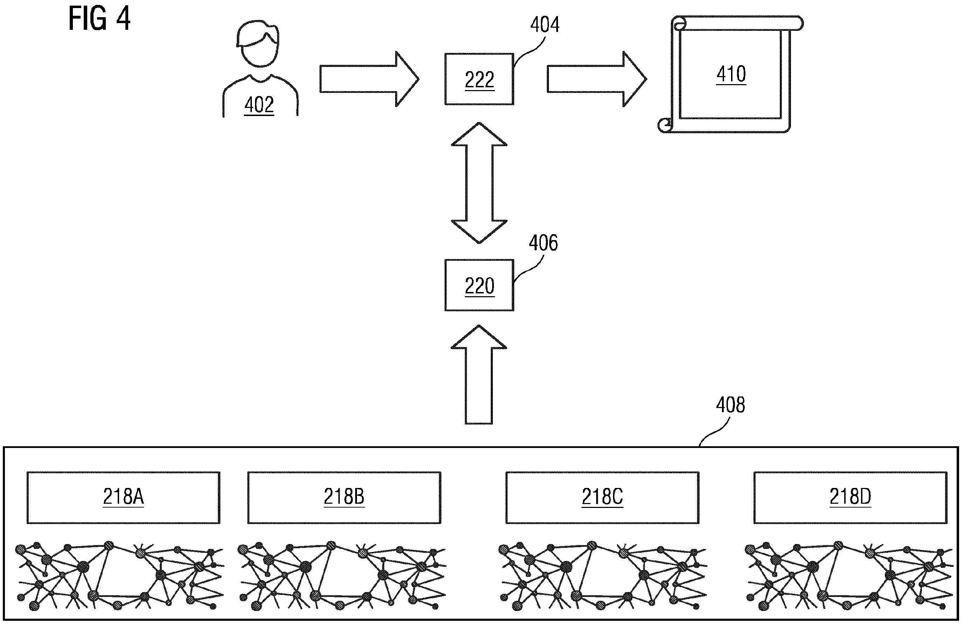

FIG 4 is an exemplary depiction of the domain corrected text generation by the corrector unit 220 and multiple domain specific databases 218A-N, in accordance with one or more embodiments of the present disclosure. Referring to the FIG. 4, the proposed solution includes the automatic creation of the product and the domain meta-data related to the various objects by parsing and analyzing the technical and domain related documents by the system 200. The system 200 filters out the information or the terms which are not related or relevant to the domain of work. The system 200 creates the domain specific databases 218A-D (showed in step 408), of the refined meta-data which are related and relevant to the domain. Further, from the domain specific databases 218A-D the domain and the product based logical knowledge graphs each are formulated. The knowledge graph is then integrated with a cognitive DSL corrector or the corrector unit 220 which can take voice message as an input (any on-field information needs to share with organization) from the Domain experts. At step 404 the cognitive API 222 interfaces captures the user input (step 402) in the form of voice message and transform it to error free domain corrected clear text in a completely automated manner using the corrector unit 220, provided in step 410. This can also collect required on-field information by guiding or assisting the end-user through real time interactions there by passing the noise free user feedback and application/product status from the field.

The corrector unit 220 integrated with the domain specific database 218 is the main part of the proposed solution that takes the input from the cognitive API 222. The Cognitive API 222 converts the input voice to text version of the user input, which is then interpreted, parsed, and corrected from the specific domain and product point of view. This auto-correction performed on the text will be on a specific domain context, it can be vocabulary change, word, or sentence correction. The corrector unit 220 which performs this domain-based auto-correction is integrated to underlying domain specific database 218 with the reference of which it can parse or perform the domain correctness of the user inputs.

In an example, consider "Breaker" is an electrical device, which can be easily confused when the context of the input is not identified. And so, the field message with the keyword goes wrong when the context or the domain is not identified - in this case electrical domain. After analyzing the domain of the message if there is any kind of error or mistakes, in a domain context, this can be also corrected automatically by the system 200. In another example, consider "Armed Away" is a security keyword, which gets wrong in normal English transcription, but when switched to security domain context, the input is valid. In yet another example, the term "temperature" could be a word used in the Building Automation context which can be wrongly interpreted in medical domain if the context is not clear.

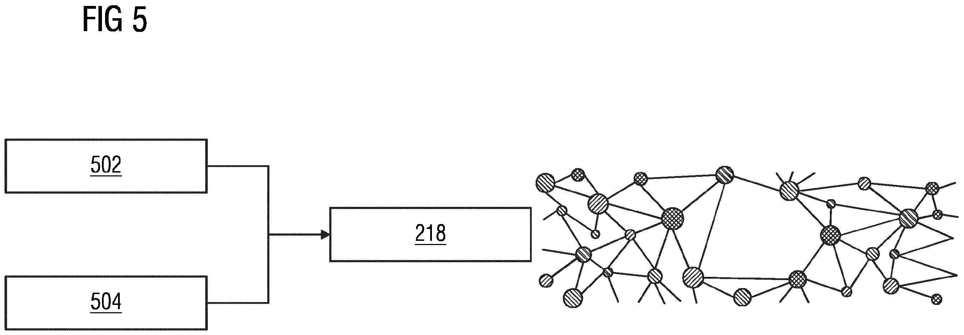

FIG 5 is an exemplary depiction of the domain specific database 218 integrated with product specific data, in accordance with one or more embodiments of the present disclosure. Referring to the FIG. 5, the domain specific databases 218A-N are created out of different domains and specific to the domain products. For example, consider a medical domain specific database 502 includes medical domain knowledge built-in along with specific medical product knowledge 504. Similarly, an electrical domain specific database 502 includes electrical domain knowledge built-in along with specific electrical product knowledge 504. These domain specific databases 218A-N are domain-based knowledge graphs, which can represent the domain world. These DSL based knowledge graph gets enhanced with product specific data for each product the solution is shipped. The domain products or solutions will have respective product dictionary or knowledge graph. The organization which ships the product would have the domain specific database which gets updated or enhanced with respect to each domain over the period of time. The corrector unit 222 is integrated with the domain specific database 218 and generated knowledge graph, this solution can be shipped with various products across domains. The dictionary and associated knowledge graph can be easily updated for on-prim, offline devices as well as for cloud solutions.

Therefore, the corrected information will be used by the organization product or the R&D team for product support or enhancement. The proposed solution helps the clients to seamlessly connect to the organization in an error free manner and with domain clarity which eventually improves customer relationship and thereby brings customer to a closed loop with the R&D team.

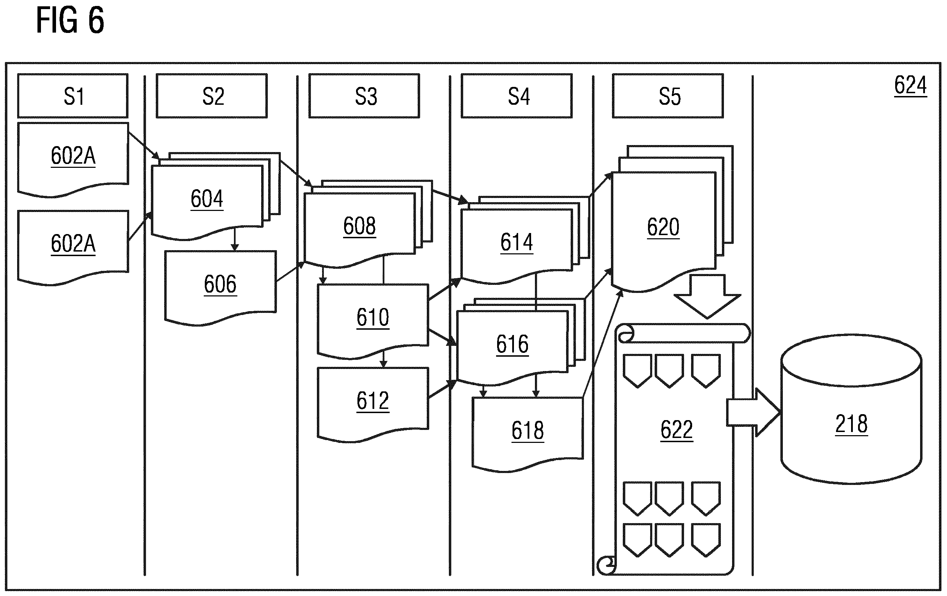

FIG 6 is an exemplary depiction of a method of extracting domain specific meta-data 622 associated with the plurality of content, in accordance with one or more embodiments of the present disclosure. The plurality of content from the documents that are spread across the distributed systems cannot be collated as it is. And hence the meta-data needs to be extracted. The different humongous product related documents, the technical documents or the domain related documents in the distributed system are processed and the domain specific meta-data 622 is extracted in multiple stages using deep learning techniques to create the domain specific meta-data 622. At S1 the artifacts (602A) are extracted from the multiple documents, in S2 the dataset 604 is formulated and smart artefacts 606 is extracted. Similarly, datasets (608, 614, 616 and 620) and artefacts (610, 618) are used to arrive at the domain specific meta-data 622. The domain specific meta-data 622 related to the product and the domain which are extracted is stored in the domain specific database 218 and is made available to the corrector unit 222 by integrating the two.

Here, the use of the deep learning techniques to extract the meta- information associated with the domain specific documents ensures that a large pool of keywords is extracted and made available for the domain specific database 218. As a result, the proposed solution includes multiple knowledge graphs which are formulated using the keywords.

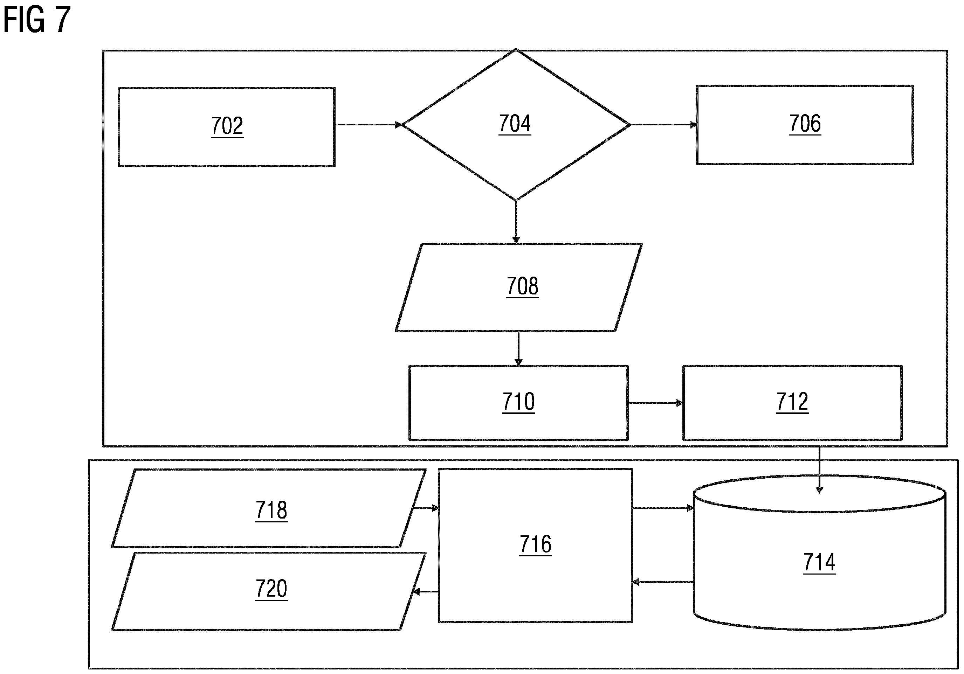

FIG 7 is a flowchart representation of a method of creation of the domain specific database integrated with corrector unit, in accordance with one or more embodiments of the present disclosure.

Referring to the FIG. 7, at step 702, the system 200 monitors and tracks the multiple documents which are spread across the distributed systems. At step 704, the system determines whether the documents are in the readable format or in a required format for further processing. In response to determining that the documents are not in the required format, the system converts the documents into the required standard format and then used at step 708. Also, the documents in the readable format are further processed in step 708.

At step 710, the system 200 analyses and extracts the dataset or the keywords. Further, the dataset is used to generate the multiple knowledge graphs. At step 712, the system 200 identifies the domain and contextualizes then creates domain specific meta-information which are then stored in the domain specific database 218, at step 714. At step 716, the domain specific database 218 is integrated to the corrector unit 220 with the cognitive API 222.

In the proposed solution, at step 718, the user provides the input voice to the cognitive API 222 which is integrated to the corrector unit 220. At step 720, the system 200 based on steps 702-716, automatically determines the domain corrected transcription script, which is then sent to the R&D team who can easily interpret the user input or the user feedback and address the same.

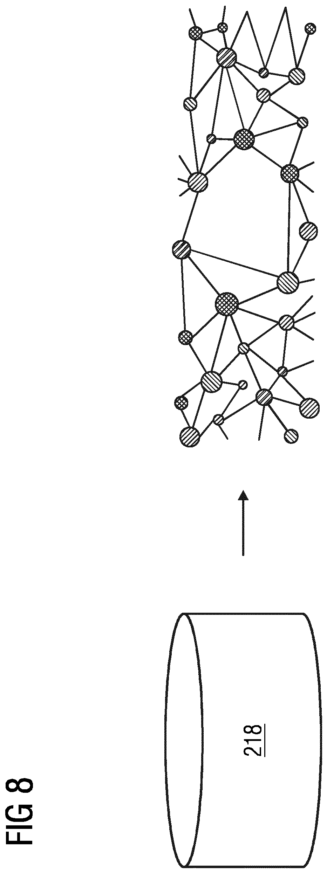

FIG 8 is an exemplary depiction of the domain specific database 218A and the corresponding knowledge graph, in accordance with one or more embodiments of the present disclosure. Referring to the FIG. 8, from the plurality of the domain specific databases 218A-N, the system 200 formulates the domain based logical knowledge graphs and the product based logical knowledge graphs. These knowledge graph creates a logical network from a Domain point of view, with each node representing a domain specific logical keyword and connected domain actions, which is also connected to the product specific details. The corrector unit 220 is integrated with the domain specific database 218A and generated knowledge graph. The Knowledge graph is the reference point for the corrector unit 220 to interpret the input message.

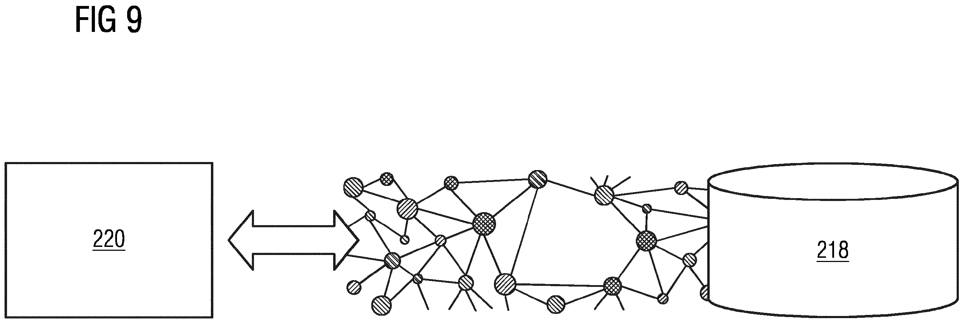

FIG 9 is an exemplary depiction of a solution with the corrector unit 220 integrated with the knowledge graphs and domain specific database 218, in accordance with one or more embodiments of the present disclosure. Here, the corrector unit 220 is integrated with the cognitive API 222 on the other side, takes the input voice and compares the user input with the knowledge graph. Here, it tries to corelate the user input with the knowledge graph and takes the corrective actions by interpreting or providing a meaningful logical interpretation for the user input. In order to interpret the user input, the corrector unit 220 may also interact back with user to provide more information for the input text domain completion.

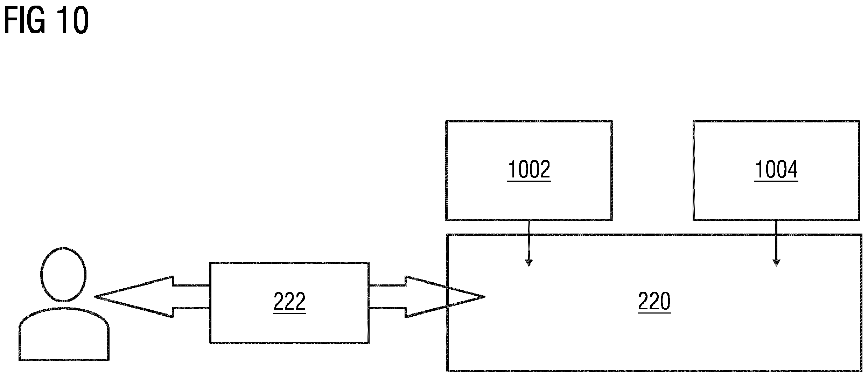

FIG 10 is an exemplary depiction of the method for managing the domain specific user interactions by the system 200, in accordance with one or more embodiments of the present disclosure. Referring to the FIG. 10, the corrector unit 220 accepts the user input via cognitive API 222. The product information 1002 and the domain information 1004 are already set and defaulted to the corrector unit 220. The context and user perzonas are collected from the user by corrector unit 220 over the cognitive API 222. The corrector unit 220 which takes the user input compares the content in the user input and corelate the same with the knowledge graph taking into consideration the Product, Domain, Context and User personas. The interpreted text output is then transferred back to the R&D or the support. This brings the customer feedback directly into R&D team. Thus, providing a complete continues feedback and enabling the R&D team to address the correct user feedback.

Therefore, the proposed solution extracts meta-data from various product, technical, domain and industry related documents and automatically generates the domain specific databases 218A-N. Further, these domain specific databases 218A-N are integrated with the corrector unit 220 which is also connected to the cognitive API capabilities for auto correction of transcription text. Hence the proposed solution can efficiently and seamlessly provide corrected transcription of the user input which can be used by the support team to address the user request/input.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**REFERENCE NUMERALS**

| | |
|---|---|
| METHOD | 100 |
| STEP | 101 |
| STEP | 102 |
| STEP | 103 |
| STEP | 104 |
| STEP | 105 |
| SYSTEM | 200 |
| BUS | 202 |
| PROCESSOR | 204 |
| MEMORY | 206 |
| INTERFACE | 208 |
| DATABASE | 210 |
| TRANSCEIVER | 212 |
| SENSORS | 214 |
| INTERACTIONS MANAGEMENT UNIT | 216 |
| DOMAIN SPECIFIC DATABASE | 218A |
| DOMAIN SPECIFIC DATABASES | 218A-N |
| CORRECTOR UNIT | 220 |
| API | 222 |
| STEP | 302 |
| STEP | 304 |
| STEP | 306 |
| STEP | 402 |
| STEP | 404 |
| STEP | 406 |
| STEP | 408 |
| STEP | 410 |
| MEDICAL DOMAIN SPECIFIC DATABASE | 502 |
| SPECIFIC MEDICAL PRODUCT KNOWLEDGEBASE | 504 |
| ARTIFACTS | 602A |
| ARTIFACTS | 610 |
| ARTIFACTS | 618 |
| DATASETS | 604 |
| DATASETS | 608 |
| DATASETS | 614 |
| DATASETS | 616 |
| DATASETS | 620 |
| DOMAIN SPECIFIC META-DATA | 622 |
| STEP | 702 |
| STEP | 704 |
| STEP | 706 |
| STEP | 708 |
| STEP | 710 |
| STEP | 712 |
| STEP | 714 |
| STEP | 716 |
| STEP | 718 |
| STEP | 720 |
| PRODUCT INFORMATION | 1002 |
| DOMAIN INFORMATION | 1004 |

## Claims

1. A method for managing domain specific user interactions by a system (200), the method (100) comprising:
receiving at least one user input using an application program interface (API) (222);
determining a text version of the at least one user input;
analysing the text version of the user input by a corrector unit (220) based on a communication with a domain specific database (218A) of a plurality of domain specific databases (218A-N), wherein each of the domain specific database (218A-N) comprises knowledge graphs associated with at least one of a product and a domain of the product;
determining a domain specific correction for the text version of the user input based on a correlation between the at least one user input and at least one knowledge graph; and
displaying the text version of the user input with the domain specific correction.

2. The method (100) according to claim 1, wherein the knowledge graphs is a domain based logical network comprising a plurality of nodes, and each node of the plurality of nodes represents a domain specific keyword and the domain specific keyword is connected to domain actions and specific details associated with the product.

3. The method (100) according to claim 1 or 2, wherein determining the domain specific correction for the text version of the user input based on the correlation between the at least one user input and at least one knowledge graph comprises:
comparing the text version of the user input and the plurality of nodes in the knowledge graphs;
determining by the corrector unit (220) the correlation between the at least one user input and the at least one knowledge graph based on the comparison; and
determining the domain specific correction for the text version of the user input based on the correlation between the at least one user input and at least one knowledge graph.

4. The method (100) according to anyone of claims 1-3, wherein displaying the text version of the user input with the domain specific correction comprises:
performing auto-correction to the text version of the user input based on the determined domain specific correction; and
displaying auto-corrected text version of the user input.

5. The method (100) according to anyone of claims 1-4, wherein a generation of the domain specific database unit (218A) comprises:
identifying a plurality of content associated with at least one of a product and a domain of the product, across a distributed system;
extracting meta-data associated with the plurality of content by parsing the plurality of content;
obtaining the meta-data related to at least one of the product and the domain of the product based on a filtering of the meta-data associated with the plurality of content; and
generating the domain specific database unit (218A) comprising the meta-data related to at least one of the product and the domain of the product.

6. The method (100) according to claim 4, further comprises:
generating the knowledge graphs associated with at least one of the product and the domain of the product based on the meta-data in the domain specific database (218A).

7. The method (100) according to anyone of claims 1-6, wherein the corrector unit (220) is connected to the API (222) on one side and to the domain specific database (218A) on another side.

8. The method (100) according to anyone of claims 1-7, wherein the correlation between the at least one user input and the at least one knowledge graph is determined by corrector unit (220) by taking into consideration the at least one product, the domain of the product, a user context and user personas.

9. The method (100) according to anyone of claims 1-8, further comprises:
sending the text version of the user input with the domain specific correction to a support unit (224) for responding to the at least one user input.

10. The method (100) according to claim 8, wherein the text version of the user input with the domain specific correction invokes a digital assistant of the support unit (224).

11. A system (200) for managing domain specific user interactions, the system (200) comprising:
an interface configured to receive at least one user input using an application program interface (API) (222);
a processor (204); and
a memory (206) coupled to the processor (204), wherein the memory (206) comprises instructions which, when executed by the processor (204), configures the processor (204) to:
determine a text version of the at least one user input;
analyse the text version of the user input by a corrector unit (220) based on a communication with a domain specific database (218A) of a plurality of domain specific databases (218A-N), wherein each of the domain specific database (218A-N) comprises knowledge graphs associated with at least one of a product and a domain of the product;
determine a domain specific correction for the text version of the user input based on a correlation between the at least one user input and at least one knowledge graph; and
display the text version of the user input with the domain specific correction.

12. A computer program product, comprising computer program code which, when executed by a processor (204), cause the processor (204) to carry out the method (100) of one of the claims 1 to 10.

13. A computer-readable medium comprising a computer program product comprising computer program code which, when executed by a processor (204), cause the processor (204) to carry out the method (100) of one of the claims 1 to 10.
